# EUROPÄISCHE PATENTSCHRIFT

(11) **EP 0 943 751 B1**
(45) Veröffentlichungstag und Bekanntmachung des Hinweises auf die Patenterteilung: **23.11.2005**
(21) Anmeldenummer: 99105587.2
(22) Anmeldetag: 18.03.1999
(51) Int. Cl.: E04F 13/08, F16B 21/08

(54) **Verfahren zur lösbaren Befestigung von Verkleidungsteilen mit Toleranzausgleich an Trägern mit Aufnahmerastern**
A method of releasably attaching coverings with tolerance compensation onto supporting rasters
Procédé pour l'attachement amovible d'éléments de revêtement à compensation des tolérances sur des réseaux support

(30) Priorität: 18.03.1998 DE 19811792
(43) Veröffentlichungstag der Anmeldung: 22.09.1999
(73) Patentinhaber: ALSTOM LHB GmbH, 38233 Salzgitter (DE)
(72) Erfinder: Meyer, Dieter, 31224 Peine (DE)

(56) Entgegenhaltungen:
- DE-A- 1 953 961
- DE-A- 3 841 179
- FR-A- 2 206 772
- US-A- 2 327 605

## Beschreibung

Die Erfindung betrifft ein Verfahren nach Anspruch 1.

Es ist bekannt, Innenräume von Eisenbahnwagen, Bussen und allgemein von Fahrzeugen, die ein tragendes Kastengerippe aufweisen mit Verkleidungselementen auszukleiden und bei Bedarf mit diesen auch einzelne Abteile oder Bereiche zu bilden. Zu den Verkleidungselementen zählen z. B. Wand- und Deckenverkleidungen sowie Trennwände zur Abteilunterteilung.

Bei Eisenbahnwagen werden Wand- und Deckenverkleidungen über Futterkörper oder direkt mit der tragenden Struktur des Kastengerippes bzw. des Rohbaus verschraubt. Ein Toleranzausgleich erfolgt durch Anpassen mit einer Vielzahl von Futterhölzem. Zwischen Kastengerippe und Verkleidungselementen werden zur Schalldämmung und zur Schwingungsentkopplung zwischen Rohbau und Verkleidungselementen Streifen aus Kunststoff, Filz oder Elastomeren aufgeklebt.

Die direkte Befestigung der Verkleidungselemente am Rohbau oder ggf. über Futterhölzer und Abdeckleisten ist aufwendig und kostenintensiv, da entsprechend der Toleranzen des Rohbaus alle Verkleidungssteile einzelnen an und eingepaßt werden müssen.

Sollen Verkleidungselemente ausgewechselt werden, so sind auch die hierfür notwendigen Arbeiten entsprechend aufwendig. Dies kann aus Gründen einer Beschädigung als auch bei Umrüstungen oder Neugestaltungen der Fahrzeuge erforderlich sein.

Auch ist es bekannt, Verkleidungsteile mit Hilfe von sog. Klettbändern am Wagenkastenrohbau zu befestigen. Dazu werden z. B. auf die offenen Blechkanten eines Abschnitts ein Klemmprofil gesteckt, an dem auf der dem Innenraum des Fahrzeugs zugewandten Seite das Klettband aufgeklebt ist. Die Einheit aus Klemmprofil und Klettband kann als fertig konfektionierte Meterware bezogen werden. Auf die Innenseite eines Innenverkleidungsteils wird an den Kontaktstellen nach Reinigung ein Flauschband mit vorzugsweise selbstklebender Beschichtung geklebt.

Die Verwendung von Klettband-Verbindungen zur Befestigung von Verkleidungsteilen am Wagenkastenrohbau konnte zwar Montagezeit eingespart werden, es sind aber auch einige Nachteile aufgetreten und zu berücksichtigen. Die Innenseite der Verkleidungsteile müssen an den Klebestellen gereinigt und bis zur Klebung fett- und staubfrei gehalten werden. Oft ist nur durch Verwendung von Montageschablonen eine ausreichende Deckung von Flausch- und Klettbänder sicherzustellen. Auch ist die Klebebeschichtung der Flauschbänder nicht sicher bekannt und verträgt sich nicht mit dem Material des Verkleidungsteils. Sog. Weichmacher wandern mit der Zeit aus dem Kunststoffmaterial des Verkleidungsteils in die Klebeschicht und zersetzen diese, was zur Aufhebung der Klebeverbindung und zum Lockern und Abfallen des Verkleidungsteils führt.

Wegen der weitgehend gleichbleibenden Dicke von Klett- und Flauschband ist ein Toleranzausgleich durch diese Verbindung senkrecht zur Wandebene nicht möglich. Dies kann zu einem völlig undefiniertem Tragverhalten der Klettverbindung führen und der Traganteil kann von ca. 60 % im Normalfall auf unter 20 % verringert sein.

Eine gleichartige Verbindung zwischen Verkleidungselementen und einem Kastengerippe eines Fahrzeugs mittels Klettband, die dieses letzte Problem berücksichtigt, ist z. B. aus der DE 33 44 995 A1 bekannt. Hierbei weist die Verbindung eine Distanzschiene auf, die in Form eines Winkelprofils ausgebildet ist, dessen einer Schenkel mit Langlöchern versehen ist und mit Teilen des Kastengerippes verschraubt ist, wobei über die Langlochverschraubung ein Toleranzausgleich senkrecht zur Wandebene möglich ist. Der andere Schenkel des Winkelprofils ist mit einem elastischen Überzug versehen. Die Verkleidungsteile werden lediglich mit dem Überzug, vorzugsweise mittels eines Klettverschlusses verbunden. Die anderen vorgeschriebenen Nachteile und Probleme bestehen allerdings auch hier.

Aus der FR-A-2 206 772 ist Verfahren zur Befestigung von Verkleidungsplatten an einer Wand bekannt. Bei diesem Verfahren ist jede Verkleidungsplatte mit Steckelementen eines zweiteiligen, wieder lösbaren Systems. Das Prinzip ähnelt dem eines Druckknopfes. Die Aufnahmeelemente dieses Systems befinden sich in einer an der Wand befestigten Halterung. Auf diese Weise können die Verkleidungsplatten durch einfaches Zusammenstecken montiert oder entfernt werden. Eine Befestigung mittels Gips oder Zement ist nicht erforderlich. Die Halterung bei diesem Verfahren besteht aus einem Tragteil (Paneel), auf dem alle Aufnahmeelemente an präziser Stelle angeordnet sind oder aus horizontalen Leisten, die eine Gleitschiene bilden, in der die Aufnahmeelemente frei gleiten können oder aus Blöcken aus elastischem Material mit einer Öffnung für den runden Kopf des Steckelementes. Bei letzterer Lösung ist der runde Kopf des Steckelementes unter Kraftwirkung in die Öffnung einsetzbar und frei in der ganzen Erstreckung der Vertiefung positionierbar.

Der Erfindung liegt daher die Aufgabe zugrunde, ein Verfahren bzw. eine Verbindung aufzuzeigen, bei dem/der bei der Montage ein Verkleidungsteil an Trägern mit Aufnahmerastem mit Toleranzausgleich schnell, einfach und dauerhaft möglich ist, wobei auch ein erneutes schnelles paßgenaues Montieren nach Abnahme des Verkleidungsteils gegeben sein soll.

Diese Aufgabe wird durch das im Anspruch 1 gekennzeichnete Verfahren gelöst.

Zweckmäßige Weiterbildungen der Erfindung sind in den Unteransprüchen angegeben.

Die Erfindung wird nachfolgend anhand eines Ausführungsbeispiels mit Bezug auf eine Zeichnung näher erläutert.

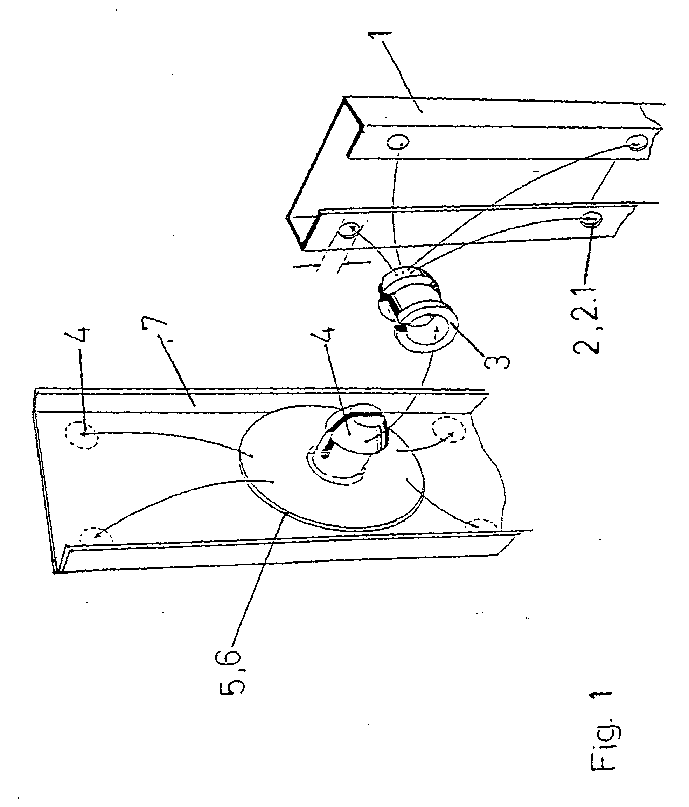

Es zeigt
- Fig. 1: ein Erzeugnis, das nach dem Verfahren gemäß der Erfindung hergestellt wird bzw. wurde.

Am im Rohbau eines Fahrzeugs angeordneten Träger 1 sind Aufnahmeöffnungen 2.1 als Aufnahmeraster 2 angeordnet. In die Aufnahmeöffnungen 2.1 ist je eine Haltebuchse 3 befestigt, in die je ein passender Haltebolzen 4 unter Klemmwirkung eindrückbar und einrastbar ist. Der Haltebolzen 4 weist auf der nach außen weisenden Rückseite eine Auflagefläche 5 auf. Der Haltebolzen 4 wird in die Haltebuchse 3 gedrückt und die Auflageflächen 5 werden mit Klebstoff 6 bestrichen. Das zugeordnete Verkleidungsteil 7 wird nun aufgesetzt und ausgerichtet und bis zum ortsfesten Haften des Klebstoffes 6 fixiert.

Die Haltebuchse 3 ist zweckmäßig am Träger 1 befestigt, vorzugsweise als Spreizring ausgebildet, in den der Haltebolzen 4, ausgebildet als Klipphalter, z. B. mit verdicktem Kopfabschnitt, eindrückbar und federbelastet einrastbar ist. Die Federbelastung erfolgt vorzugsweise über Materialelastizitäten der Verbindungelemente (Haltebuchse 3 / Haltebolzen 4) selbst. Die Eigenschaften von Haltebolzen 4 (Klipphalter) und Haltebuchse 3 (Spreizring) sind so aufeinander abgestimmt, daß Verschleiß beim Lösen der Rastverbindung im wesentlichen nur bei der Haltebuchse 3 (Speizring) auftritt. Dadurch wird der geklebte Haltebolzen 4 (Klipphalter) geschützt. Die Haltebuchse 4 (Spreizring) läßt sich leicht austauschen.

Als Klebstoff 6 hat sich Polyurethankleber bewährt.

Bei genauer Bearbeitung und/oder Nachbearbeitung der Aufnahmeraster 2 (Aufnahmeöffnungen 2.1) ist es auch möglich die Haltebolzen 4 und damit das Verkleidungsteil 7 direkt in die Aufnahmeöffnungen 2.1 im Träger 1 zu befestigen.

### Bezugszeichenliste

- 1: Trägerteil
- 2: Aufnahmeraster
- 3: Haltebuchse
- 4: Haltebolzen
- 5: Auflagefläche
- 6: Klebstoff
- 7: Verkleidungsteil

## Patentansprüche

1. Verfahren zur lösbaren Befestigung von Verkleidungsteilen mit Toleranzausgleich an Trägem (1) mittels Aufnahmerastem (2), wobei entweder in die Aufnahmeraster (2) je eine Haltebuchse (3) befestigt wird, in die ein passender Haltebolzen (4) unter Klemmwirkung einrastbar ist oder die Funktion der Haltebuchsen (3) direkt durch die Aufnahmeöffnungen (2.1) am Träger (1) realisiert ist, und der Haltebolzen (4) auf der nach außen weisenden Rückseite eine Auflagefläche (5) aufweist, wobei ferner auf die Auflagefläche (5) nach oder vor dem Eindrücken des Haltebolzens (4) in die Haltebuchse (3) Klebstoff (6) aufgetragen wird und wobei danach das Verkleidungsteil (7) auf die Auflagefläche (5) aufgesetzt und ausgerichtet und bis zum ortsfesten Haften des Klebstoffs (6) fixiert wird.

2. Verfahren nach Anspruch 1, **dadurch gekennzeichnet, dass** die Haltebuchse (3) am Trägerteil (1) und der Haltebolzen (4) am Verkleidungsteil (7) angeordnet ist.

3. Verfahren nach Anspruch 1 oder 2, **dadurch gekennzeichnet, dass** die Haltebuchse (4) als Spreizring und der Haltebolzen (4) als Klipphalter mit verdicktem Kopfabschnitt ausgebildet sind.

## Claims

1. Method for releaseably fastening covering parts with tolerance compensation to carriers (1) by means of receiving grids (2), wherein either a respective holder sleeve (3), into which a fitting holder bolt (4) can be latched with a clamping action, is fastened in the receiving grids (2), or the function of the holder sleeves is directly produced by the receiving openings (2.1) on the carrier (1), and the holder bolt (4) has a support face (5) on the outwardly facing rear side, wherein adhesive (6) is also applied to the support face (5) after or prior to pressing in the holder bolt (4) into the holder sleeve (3) and wherein the covering part (7) is then placed on the support face (5) and aligned and is secured until the adhesive (6) adheres in a fixed manner.

2. Method according to claim 1, **characterised in that** the holder sleeve (3) is arranged on the carrier part (1) and the holder bolt (4) on the covering part (7).

3. Method according to claim 1 or 2, **characterised in that** the holder sleeve (4) is configured as an expanding ring and the holder bolt (4) as a clip holder with a thickened head portion.

## Revendications

1. Procédé pour la fixation amovible d'éléments de revêtement avec une compensation de tolérances sur des supports (1) à l'aide d'ouvertures d'enclenchement (2), selon lequel soit on fixe dans chaque ouverture d'enclenchement (2) une douille de fixation (3) dans laquelle une tige de fixation adaptée (4) est apte à être encliquetée avec une action de serrage, soit la fonction des douilles de fixation est assurée directement par les ouvertures de réception (2.1) prévues sur le support (1), et la tige de fixation (4) présente sur sa face arrière dirigée vers l'extérieur une surface d'appui (5), selon lequel on applique une colle (6) sur la surface d'appui (5) après ou avant l'enfoncement de la tige de fixation (4) dans la douille de fixation (3), puis on pose l'élément de revêtement (7) sur la surface d'appui (5), on l'oriente et on le fixe jusqu'à ce que la colle (6) adhère de manière fixe.

2. Procédé selon la revendication 1, **caractérisé en ce que** la douille de fixation (3) est disposée sur l'élément de support (1), et la tige de fixation (4) sur l'élément de revêtement (7).

3. Procédé selon la revendication 1 ou 2, **caractérisé en ce que** la douille de fixation (3) est conçue comme un anneau d'écartement, et la tige de fixation (4) comme une attache de clipsage avec une section de tête épaissie.
